# EUROPEAN PATENT SPECIFICATION

(11) **EP 3 269 688 B1**
(45) Date of publication and mention of the grant of the patent: **28.04.2021**
(21) Application number: 16761302.5
(22) Date of filing: 08.03.2016
(51) Int. Cl.: C03B 33/07, C03C 27/06, B28D 1/24, E06B 3/673, E06B 3/66, E06B 3/663, E06B 3/677

(54) **MANUFACTURING METHOD FOR GLASS PANEL UNIT AND MANUFACTURING METHOD FOR GLASS WINDOW**
HERSTELLUNGSVERFAHREN FÜR GLASSCHEIBENEINHEIT UND HERSTELLUNGSVERFAHREN FÜR GLASFENSTER
PROCÉDÉ DE FABRICATION POUR UNITÉ DE PANNEAU DE VERRE ET PROCÉDÉ DE FABRICATION DE FENÊTRE VITRÉE

(30) Priority: 11.03.2015 JP 2015048566
(43) Date of publication of application: 17.01.2018
(73) Proprietor: Panasonic Intellectual Property Management Co., Ltd., Osaka-shi, Osaka 540-6207 (JP)
(72) Inventor: NONAKA, Masataka, Chuo-ku, Osaka-shi OSAKA 540-6207 (JP); URIU, Eiichi, Chuo-ku, Osaka-shi OSAKA 540-6207 (JP); ISHIBASHI, Tasuku, Chuo-ku, Osaka-shi OSAKA 540-6207 (JP); ABE, Hiroyuki, Chuo-ku, Osaka-shi OSAKA 540-6207 (JP); ISIKAWA, Haruhiko, Chuo-ku, Osaka-shi OSAKA 540-6207 (JP); HASEGAWA, Kenji, Chuo-ku, Osaka-shi OSAKA 540-6207 (JP); HASEGAWA, Kazuya, Chuo-ku, Osaka-shi OSAKA 540-6207 (JP)
(74) Representative: Müller-Boré & Partner Patentanwälte PartG mbB
(86) International application number: PCT/JP2016/001248
(87) International publication number: WO 2016/143328

(56) References cited:
- WO-A1-2011/117006
- WO-A1-2013/172034
- WO-A1-2013/172034
- WO-A2-2015/094898
- JP-A- S5 328 614
- JP-A- S5 328 614
- JP-A- S54 137 358
- JP-A- S54 137 358
- JP-A- 2002 241 149
- JP-A- 2008 003 388
- JP-B1- S4 814 766
- US-A- 3 281 298
- US-A1- 2008 171 209
- DATABASE WPI Week 200642 8 June 2006 (2006-06-08) Thomson Scientific, London, GB; AN 2006-406919 XP002778055, -& JP 2006 143506 A (SANYO ELECTRIC CO LTD) 8 June 2006 (2006-06-08)
- DATABASE WPI Week 200817 10 January 2008 (2008-01-10) Thomson Scientific, London, GB; AN 2008-C27088 XP002778056, -& JP 2008 003388 A (ROHM CO LTD) 10 January 2008 (2008-01-10)

## Description

### Technical Field

The present invention relates to manufacturing methods for glass panel unit and manufacturing methods for glass window, and in more detail to a manufacturing methods for a glass panel unit including a first glass substrate and a second glass substrate bonded to each other with a seal member, and a manufacturing methods for a glass window including the glass panel unit.

### Background Art

Patent Literature 1 discloses a glass panel unit where a pair of glass substrates placed facing each other are bonded to each other with a seal member.

Each of the pair of glass substrates is a glass substrate formed to have predetermined shape and dimensions, and outer peripheries of the pair of glass substrates are bonded to each other with the seal member

WO2013172034 A1 shows the sealing of two glass sheets with partition areas in between, evacuating the air in between all partition areas through one vent, further sealing the sheets such that the area become gas-tight towards each other and cutting out the areas individually next to the seals.

### Citation List

### Patent Literature

Patent Literature 1: JP HI 1-79799 A

### Summary of Invention

As to a conventional manufacturing method for a glass panel unit as shown in Patent Literature 1, the pair of glass substrates are cut to have determined shape and dimensions in advance. Subsequently, in a sealing furnace, the pair of glass substrate between which the seal member is sandwiched are heated, and thereby bonded to each other with the seal member to form a glass panel unit with desired shape and dimensions.

Accordingly, the conventional manufacturing method described above requires shaping glass substrates to have shape and dimensions corresponding to a type (shape and dimensions) of a glass panel unit to be manufactured, and bonding the shaped glass substrates to each other in a furnace. This may lead to a decrease in efficiency.

An object to be solved by the present invention would be to efficiently manufacture a glass panel unit with desired shape and dimensions and a glass window including the same.

To solve the above object, a manufacturing method for a glass panel unit according to one aspect of the present invention includes a placing step, a bonding step, and a cutting step.

The placing step is a step of placing a first glass substrate and a second glass substrate to face each other with a seal member in-between.

The bonding step is a step of bonding the first glass substrate and the second glass substrate to each other with the seal member.

The cutting step is a step of cutting the first glass substrate, the seal member, and the second glass substrate collectively along a cut plane imaginary passing through the seal member from one of the first glass substrate and the second glass substrate bonded to each other.

A manufacturing method for a glass window according to one aspect of the present invention includes an assembling step of fitting the glass panel unit manufactured by the manufacturing method for a glass panel unit according to the aspect according to the present invention, into a window frame. The treatment step includes evacuating air from the inside space.

### Brief Description of Drawings

FIG. 1 is a perspective view for illustration of a placing step in a manufacturing method for a glass panel unit of the first embodiment.
FIG. 2 is a plan for illustration of a bonding step in the manufacturing method for the glass panel unit of the first embodiment.
FIG. 3 is a section taken along line A-A in FIG. 2.
FIG. 4 is a partial cutaway for illustration of a treatment step and a cutting step in the manufacturing method for the glass panel unit of the first embodiment.
FIG. 5 is a primary section for illustration of the cutting step in the manufacturing method for the glass panel unit of the first embodiment.
FIG. 6 is a plan of a glass panel unit manufactured by the manufacturing method for the glass panel unit of the first embodiment.
FIG. 7 is a section taken along line B-B in FIG. 6.
FIG. 8 is a flow chart for illustration of the manufacturing method for the glass panel unit of the first embodiment.
FIG. 9 is a plan for illustration of a placing step and a bonding step in a manufacturing method for a glass panel unit of the second embodiment.
FIG. 10 is a section taken along line C-C in FIG. 9.
FIG. 11 is a plan view for illustration of a treatment step and a cutting step in the manufacturing method for the glass panel unit of the second embodiment.
FIG. 12 is a plan for illustration of a placing step and a bonding step in a manufacturing method for a glass panel unit of the third embodiment.
FIG. 13 is a section taken along line D-D in FIG. 12.
FIG. 14 is a partially cutaway plan for illustration of a treatment step and a treatment step and a cutting step in the manufacturing method for the glass panel unit of the third embodiment.
FIG. 15 is a primary section for illustration of a cutting step in a manufacturing method for a glass panel unit of the fourth embodiment.
FIG. 16 is a primary section for illustration of the cutting step in the manufacturing method for the glass panel unit of the fourth embodiment.
FIG. 17 is a primary section for illustration of the cutting step in the manufacturing method for the glass panel unit of the fourth embodiment.
FIG. 18 is a flow chart for illustration of the manufacturing method for the glass panel unit of the fourth embodiment.
FIG. 19 is a plan of a glass panel unit manufactured by a manufacturing method for a glass panel unit of the fifth embodiment.
FIG. 20 is a section taken along line E-E in FIG. 19.
FIG. 21 is a flow chart for illustration of the manufacturing method for the glass panel unit of the fifth embodiment.
FIG. 22 is a plan of a glass window including the glass panel unit of the first embodiment.
FIG. 23 is a flow chart for illustration of a manufacturing method for the glass window including the glass panel unit of the first embodiment.
FIG. 24 is a plan of a glass window including the glass panel unit of the fifth embodiment.
FIG. 25 is a flow chart for illustration of a manufacturing method for the glass window including the glass panel unit of the fifth embodiment.

### Description of Embodiments

All embodiments, aspects and modifications given in the description and drawings that fall not under claim 1 do not form part of the present invention and are given for comparison only.

### (GLASS PANEL UNIT OF FIRST EMBODIMENT)

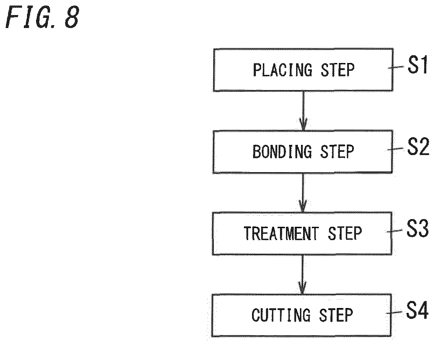

A manufacturing method for glass panel unit of the first embodiment includes a placing step S1, a bonding step S2, a treatment step S3, and a cutting step S4 (see FIG. 8).

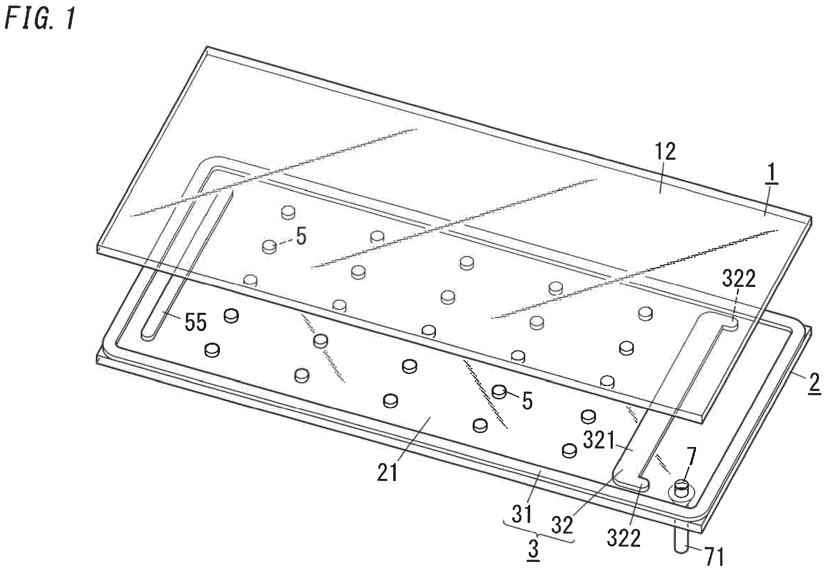

The placing step S1 is a step of placing a first glass substrate 1 and a second glass substrate 2 to face each other with a seal member 3 in-between (see FIG. 1 to FIG. 3).

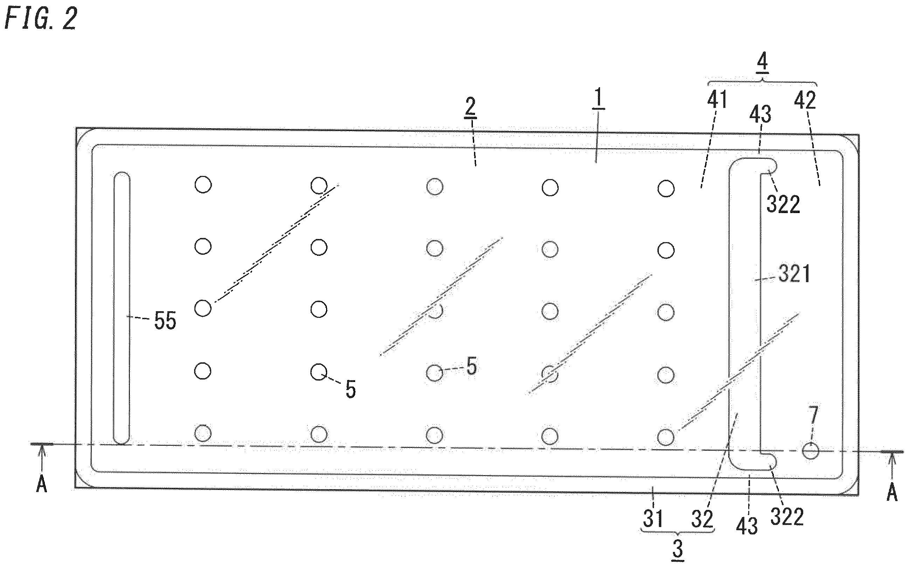

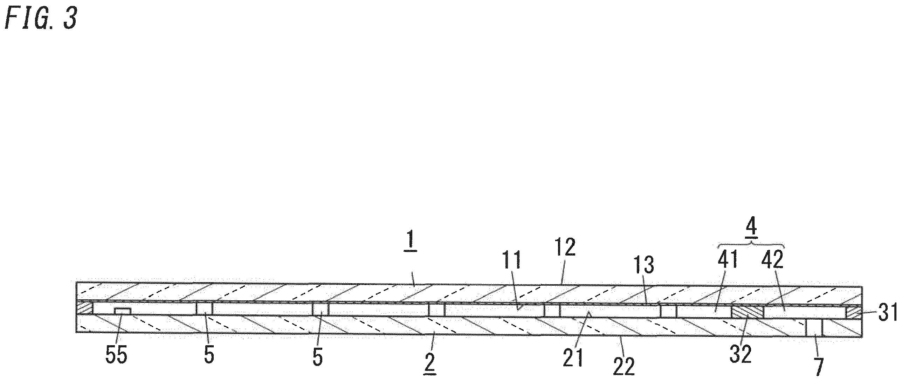

The bonding step S2 is a step of bonding the first glass substrate 1 and the second glass substrate 2 which are placed by the placing step S1, to each other with the seal member 3. Thereby, an inside space 4 is formed between the first glass substrate 1 and the second glass substrate 2, and the inside space 4 is partitioned by part (a partition member 32) of the seal member 3 into a first space 41 and a second space 42 (see FIG. 2 and FIG. 3). The first space 41 and the second space 42 are interconnected by gas passages 43.

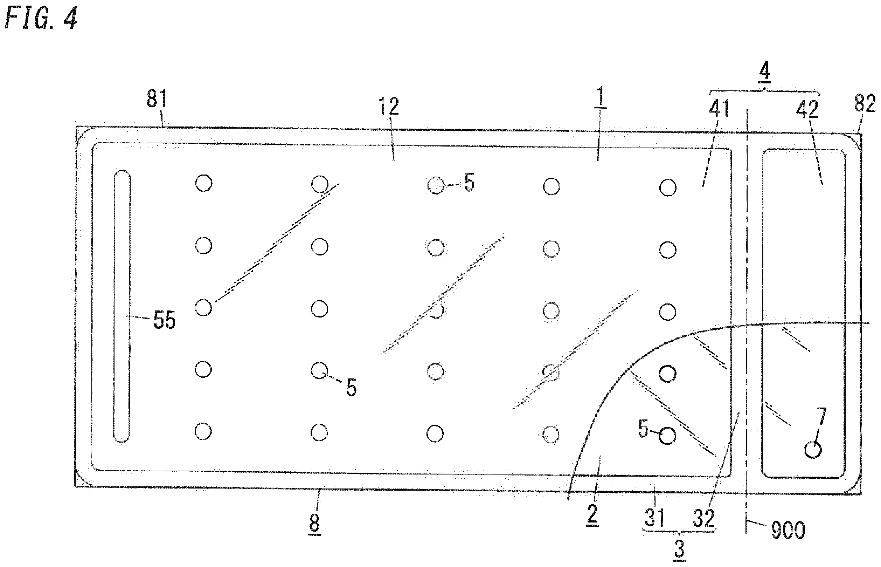

The treatment step S3 is a step of hermetically enclosing the first space 41 by evacuating air from the inside space 4 (the first space 41 and the second space 42) via a vent 7 provided to the second glass substrate 2 and then deforming the part (the partition member 32) of the seal member 3 (see FIG. 4).

The cutting step S4 is a step of physically separating the first space 41 and the second space 42 from each other by cutting the first glass substrate 1, the seal member 3, and the second glass substrate 2 along a cut plane 900 imaginary passing through the part (the deformed partition member 32) of the seal member 3 from the first glass substrate 1 (see FIG. 4 to FIG. 7).

Hereinafter, each step is described in more detail.

### <PLACING STEP>

In the placing step S1, the first glass substrate 1, the second glass substrate 2, the seal member 3, multiple spacers 5, and a gas adsorbent 55 shown in FIG. 1 to FIG. 3 are placed on designated positions, respectively.

The first glass substrate 1 is a rectangular flat plate and includes a first face 11 on one side in a thickness direction thereof and a second face 12 on the other side in the thickness direction. The first face 11 and the second face 12 of the first glass substrate 1 are flat planes parallel to each other.

Examples of material of the first glass substrate 1 may include soda lime glass, high strain point glass, chemically strengthened glass, non-alkaline glass, quartz glass, neoceram, and physically strengthened glass.

The first face 11 of the first glass substrate 1 is constituted by an outer face of a coating 13 (see FIG. 3). One example of the coating 13 is an infrared reflective film but the coating 13 may be a film with desired physical properties. The first glass substrate 1 may not include the coating 13.

The second glass substrate 2 is a rectangular flat plate likewise the first glass substrate 1. The second glass substrate 2 includes a first face 21 on one side in a thickness direction thereof and a second face 22 on the other side in the thickness direction. The first face 21 and the second face 22 of the second glass substrate 2 are flat planes parallel to each other. The vent 7 is formed in a corner of the second glass substrate 2.

Examples of material of the second glass substrate 2 may include soda lime glass, high strain point glass, chemically strengthened glass, non-alkaline glass, quartz glass, neoceram, and physically strengthened glass.

The first glass substrate 1 and the second glass substrate 2 are placed opposite each other. Here, the first face 11 of the first glass substrate 1 and the first face 21 of the second glass substrate 2 are positioned parallel to and opposite each other (see FIG. 3).

The seal member 3 is placed between the first glass substrate 1 and the second glass substrate 2. The seal member 3 includes a frame member 31 with a rectangular frame shape and the partition member 32. The frame member 31 and the partition member 32 are placed on the first face 21 of the second glass substrate 2.

The frame member 31 is placed on the first face 21 so as to extend along an outer periphery of the second glass substrate 2, and the partition member 32 is placed on the first face 21 so as to be enclosed by the frame member 31.

The first glass substrate 1 and the second glass substrate 2 are hermetically bonded to each other with the seal member 3 (the frame member 31 and the partition member 32). Thereby, the inside space 4 is formed between the first glass substrate 1 and the second glass substrate 2. The inside space 4 is a space enclosed by the frame member 31, the first glass substrate 1, and the second glass substrate 2.

The frame member 31 and the partition member 32 both are formed of grass frit (glass paste). Examples of the glass frit may include low-melting point glass frit such as bismuth-based glass frit, lead-based glass frit, and vanadium-based glass frit.

The partition member 32 includes a wall part 321 with a straight shape and a pair of closing parts 322 extending from opposite ends in a lengthwise direction of the wall part 321. The pair of closing parts 322 each extends in a direction perpendicular to the lengthwise direction of the wall part 321.

The gas passages 43 are formed between the partition member 32 and the frame member 31.

The gas passages 43 are a space formed between one end in the lengthwise direction of the wall part 321 and the frame member 31 and a space formed between the other end in the lengthwise direction of the wall part 321 and the frame member 31. Note that, locations and the number of gas passages 43 may not be limited to the current case.

The multiple spacers 5 are placed on the first face 21 of the second glass substrate 2. The multiple spacers 5 are used to keep a predetermined interval between the first glass substrate 1 and the second glass substrate 2.

The multiple spacers 5 each are made of transparent material to have a solid cylindrical shape. Materials of individual spacers 5, sizes of individual spacers 5, shapes of individual spacers 5, intervals between adjacent spacers 5, and patterns of arrangement of multiple spacers 5 may be appropriately selected. Note that, only one spacer 5 may be placed or no spacer 5 may be placed.

The gas adsorbent 55 is placed on the first face 21 of the second glass substrate 2. On the first face 21, the gas adsorbent 55 is positioned separate from the partition member 32 and the gas passages 43. The gas adsorbent 55 is used for adsorbing gas emitted from the frame member 31 and the partition member 32 when heated. Note that, the gas adsorbent 55 may be contained in one or more spacers 5, or no gas adsorbent 55 may be placed.

### <BONDING STEP>

In the bonding step S2, the first glass substrate 1 and the second glass substrate 2 which are set with the seal member 3 and the like in-between are heated in a sealing furnace, as shown in FIG. 2 and FIG. 3.

In the bonding step S2, a temperature inside the sealing furnace is set to a predetermined temperature (hereinafter referred to as a "first melting temperature") equal to or higher than a softening point of the frame member 31. The frame member 31 is molten one time inside the furnace with the first melting temperature, and thereby the first glass substrate 1 and the second glass substrate 2 are hermetically bonded to each other by way of the frame member 31.

In more detail, the first glass substrate 1 and the second glass substrate 2 placed inside the sealing furnace are heated at the first melting temperature for a predetermined period of time. In this regard, the first melting temperature and the predetermined period of time are determined so that the partition member 32 does not close the gas passages 43/

Formed between the first glass substrate 1 and the second glass substrate 2 bonded to each other is the inside space 4 enclosed by the frame member 31. The inside space 4 is partitioned by the partition member 32 into the first space 41 and the second space 42. At the time of completion of the bonding step S2, gas is allowed to move between the first space 41 and the second space 42 through the gas passages 43 positioned between the frame member 31 and the partition member 32.

The first space 41 is a space where the multiple spacers 5 and the gas adsorbent 55 are located. The second space 42 is a space directly connected to the vent 7.

The vent 7 interconnects the second space 42 and an outside space. The vent 7 of the present embodiment is used for evacuating air from the first space 41 through the second space 42 and the gas passages 43.

### <TREATMENT STEP>

The treatment step S3 is a step of making the inside space 4 to be an evacuated space, and includes an evacuating step and a hermetically enclosing step. The evacuating step and the hermetically enclosing step of the treatment step S3 are performed inside the sealing furnace subsequent to the bonding step S2.

The evacuating step is a step of making a whole of the inside space 4 to be in a vacuum state by evacuating air from the inside space 4 to outside via the vent 7.

In the evacuating step of the present embodiment, air inside the first space 41 is evacuated to outside through the gas passages 43, the second space 42, and the vent 7, and thus pressure of the first space 41 is reduced until the first space 41 is made to be the evacuated space. This evacuating process is performed by use of a vacuum pump with an evacuation pipe 71 (see FIG. 1) coupled with the second glass substrate 2 to be connected to the vent 7, for example. An evacuation period of time is determined so that the evacuated space has a desired degree of vacuum (for example, a degree of vacuum of 0.1 Pa or less).

In the hermetically enclosing step, the partition member 32 is molten at a predetermined temperature (hereinafter referred to as a "second melting temperature") equal to or higher than the softening point of the partition member 32, and thereby the partition member 32 is deformed to close the gas passages 43. Thus, a whole periphery of the first space 41 made to be in a vacuum state is enclosed by the frame member 31 and the partition member 32, and accordingly the first space 41 is hermetically enclosed so as not to allow movement of gas between the first space 41 and the outside see FIG. 4).

In more detail, the partition member 32 is deformed so that the closing part 322 at one end of the partition member 32 closes one of the gas passages 43 and the closing part 322 at the other end closes the other of the gas passages 43 (see FIG. 2 and FIG. 4). The partition member 32 deformed serves as a separator for hermetically dividing the inside space 4 in the vacuum state into the first space 41 and the second space 42.

The second melting temperature for melting the partition member 32 is set to a temperature higher than the first melting temperature. In other words, the partition member 32 is prepared to be deformed at a temperature higher than the first melting temperature to close the gas passages 43. Such temperature settings are expected to prevent deformation of the partition member 32 to close the gas passages 43 in bonding the first glass substrate 1 and the second glass substrate 2 to each other in the bonding step S2.

Through the aforementioned treatment step S3, it is possible to produce a temporary-assembled unit 8 including the first space 41 made to be the evacuated space, as shown in FIG. 4.

### <CUTTING STEP>

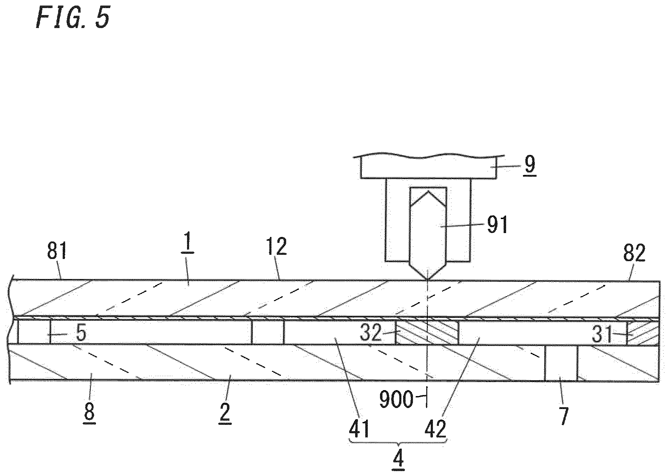

In the cutting step S4, the temporary-assembled unit 8 taken out from the sealing furnace is cut along the cut plane 900 imaginary shown in FIG. 4 and FIG. 5, and thereby physically divided into a part 81 including the first space 41 and a part 82 including the second space 42. The cut plane 900 is set to pass through an entire length of the partition member 32 in a plan view (a front view of the second face 12 of the first glass substrate 1).

To cut the temporary-assembled unit 8 along the cut plane 900, a cutting device 9 as shown in FIG. 5 is used. The cutting device 9 is a scribing device provided at its end with a wheel 91 for cutting.

The wheel 91 of the cutting device 9 is moved along the cut plane 900 wit being pressed against one surface of the temporary-assembled unit 8 (that is, the second face 12 of the first glass substrate 1. Thereby the first glass substrate 1, the seal member 3, and the second glass substrate 2 are collectively cut along the cut plane 900.

Since the partition member 32 is of glass frit molten once, the temporary-assembled unit 8 includes the first glass substrate 1 and the second glass substrate 2 which are integrated strongly by the partition member 32. Therefore, when the wheel 91 is moved with being pressed against one side, a deep crack will develop in thickness directions of the first glass substrate 1 and the second glass substrate 2. As a result, the first glass substrate 1, the partition member 32, and the second glass substrate 2 are cut along the cut plane 900 smoothly as with a single plate of glass. In summary, without splitting after scribing, the temporary-assembled unit 8 is cut smoothly as if it is a single glass panel.

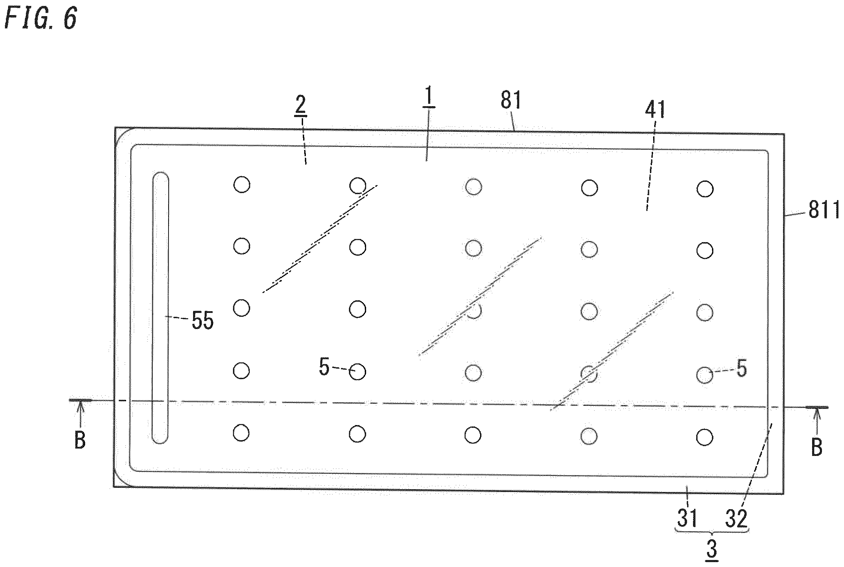

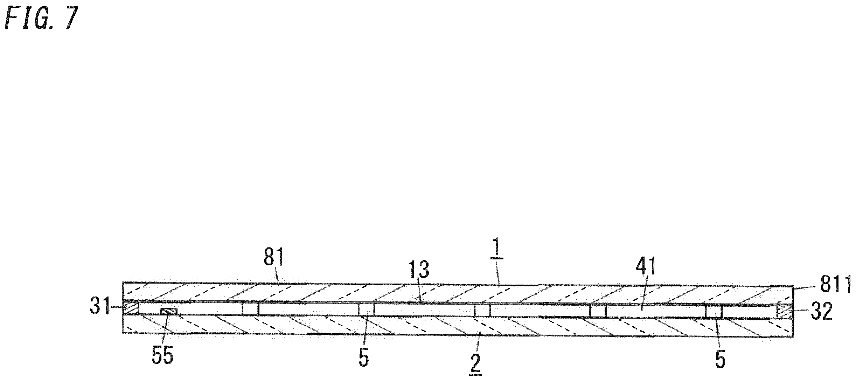

One part 81 cut from the temporary-assembled unit 8 is used as a glass panel unit (thermally insulated glass panel unit), and the other part 82 cut therefrom is an unnecessary part. The part 81 used as a glass panel unit has a sectional plane 811 including sectional planes of the first glass substrate 1, the seal member 3 (the partition member 32), and the second glass substrate 2 which are consecutive and flush to each other (see FIG. 6 and FIG. 7). Therefore, physical strength can be ensured and handleability can be improved without the sectional plane 811 being further processed. Note that, of course, the sectional plane 811 may be further processed.

The cutting device 9 may preferably include a mechanism for giving vibration to the wheel 91. A direction of the vibration would be the thickness directions of the first glass substrate 1 and the second glass substrate 2, that is a direction where the first glass substrate 1, the partition member 32, and the second glass substrate 2 are stacked. Giving that vibration in cutting can facilitate collectively cutting the first glass substrate 1, the partition member 32, and the second glass substrate 2.

Note that, the cutting device 9 may be pressed against the second glass substrate 2 to cut the temporary-assembled unit 8 along the cut plane 900. Examples of alternative devices to the cutting device 9 may include a cutting device with water jet and a cutting device with laser irradiation.

### (GLASS PANEL UNIT OF SECOND EMBODIMENT)

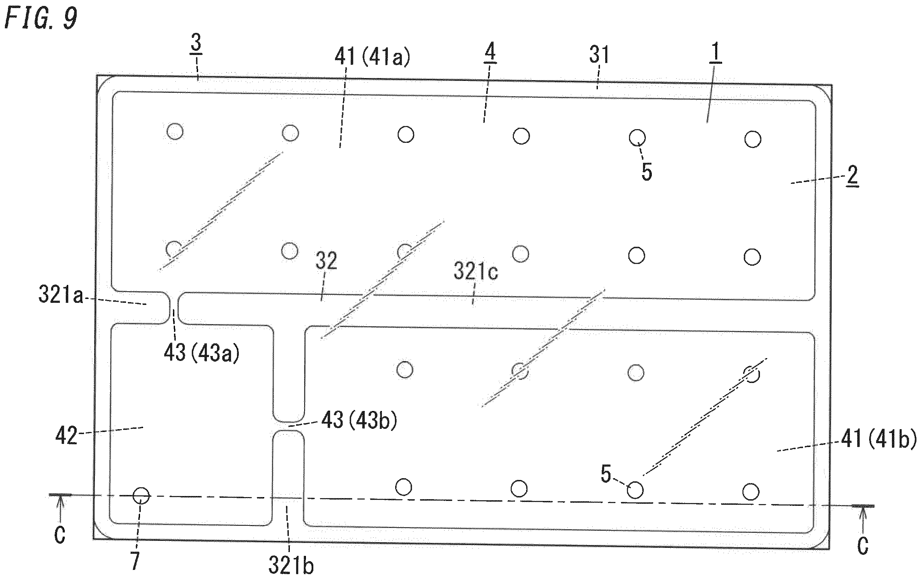

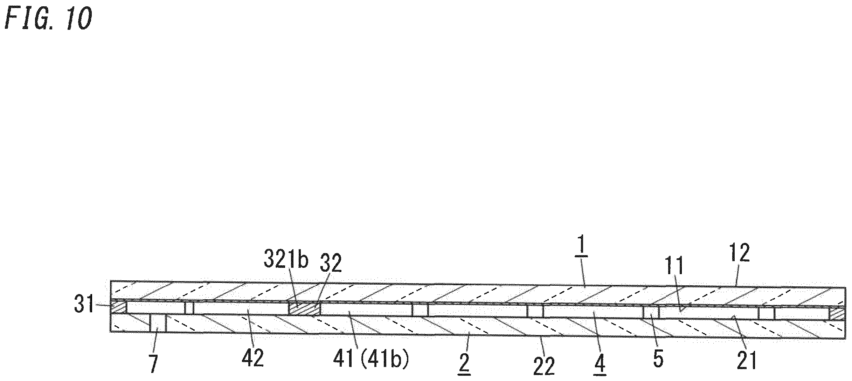

A manufacturing method for a glass panel unit of the second embodiment is described with reference to FIG. 9, FIG. 10, and FIG. 11. Note that, same components as the first embodiment are designated by common reference signs to avoid detailed descriptions, and different components from the first embodiment are described in detail.

In the manufacturing method for glass panel unit of the present embodiment, a single temporary-assembled unit 8 is formed to obtain two glass panel units from the single temporary-assembled unit 8.

In the manufacturing method for glass panel unit of the present embodiment, a step of obtaining two glass panel units includes a placing step S1, a bonding step S2, a treatment step S3 (an evacuating step and a hermetically enclosing step), and a cutting step S4.

In the placing step S1, a first glass substrate 1 and a second glass substrate 2 are placed opposite each other with a seal member 3 (a frame member 31 and a partition member 32) in-between. In the bonding step S2, the first glass substrate 1 and the second glass substrate 2 are bonded to each other with the seal member 3.

An inside space 4 enclosed by the frame member 31 between a first glass substrate 1 and a second glass substrate 2 is partitioned by the partition member 32 into two first spaces 41 and one second space 42 (see FIG. 9). Hereinafter, a first one of the first spaces 41 is designated by reference sign 41a and a second one of the first spaces 41 is designated by reference sign 41b.

The partition member 32 of the present embodiment includes a wall part 321a for separating the first space 41a and the second space 42 from each other, a wall part 321b for separating the first space 41b and the second space 42 from each other, and a wall part 321c for separating the first space 41a and the first space 41b from each other.

The partition member 32 of the present embodiment includes two gas passages 43. Hereinafter, a first one of the gas passages 43 is designated by reference sign 43a and the second one of the gas passages 43 is designated by reference sign 43b.

The gas passage 43a is formed in the wall part 321a and thereby the first space 41a and the second space 42 are interconnected by the gas passage 43a to allow gas to move therebetween. The gas passage 43b is formed in the wall part 321b and thereby the first space 41b and the second space 42 are interconnected by the gas passage 43b to allow gas to move therebetween. Note that, locations and the number of gas passages 43a and gas passages 43b are not limited to this example.

In the evacuating step of the treatment step S3, air is evacuated from the inside space 4 through a vent 7 directly connected to the second space 42 and thereby a whole of the inside space 4 is made to be an evacuated space.

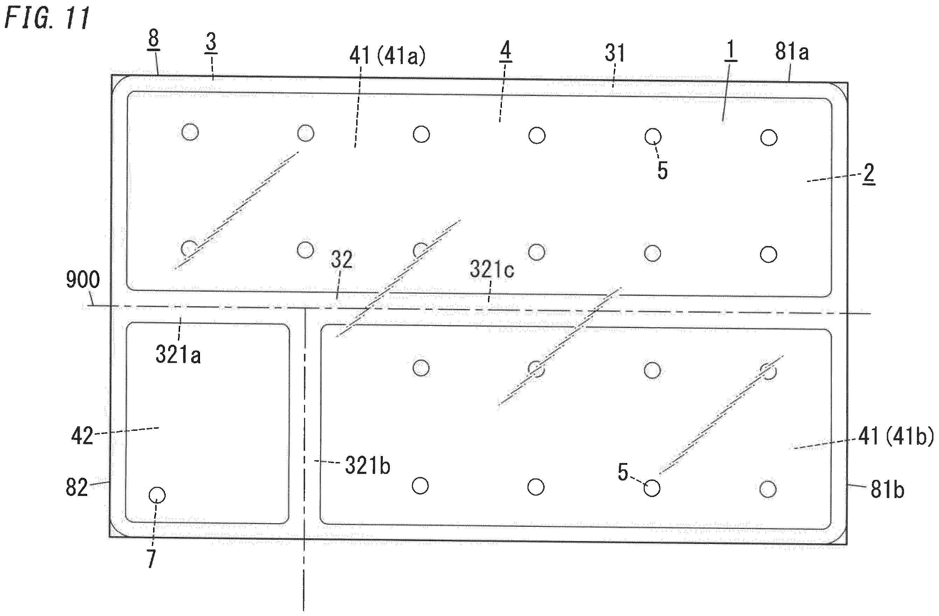

Subsequently, in the hermetically enclosing step of the treatment step S3, the wall part 321a and the wall part 321b of the partition member 32 are deformed by heating to thereby close the gas passage 43a and the gas passage 43b to prevent gas from moving therethrough. Through the aforementioned treatment step S3, it is possible to produce a temporary-assembled unit 8 including the first space 41a and the first space 41b each made to be the evacuated space, as shown in FIG. 11.

In the cutting step S4, the temporary-assembled unit 8 is cut along a cut plane 900 imaginary shown in FIG. 11. By cutting, the temporary-assembled unit 8 is physically divided into a part 81a including the first space 41a hermetically enclosed, a part 81b including the first space 41b hermetically enclosed, and a part 82 including the second space 42. Also in the present embodiment, the cutting device 9 shown in FIG. 5 may be preferably used.

The part 81a including the first space 41a in a vacuum state and the part 81b including the first space 41b in a vacuum state which are cut from the temporary-assembled unit 8 are each used as a glass panel unit (thermally insulated glass panel unit). The part 82 including the second space 42 and the vent 7 is an unnecessary part.

Also in the present embodiment, the temporary-assembled unit 8 has a structure where the first glass substrate 1, the seal member 3, and the second glass substrate 2 are stacked. However, since the temporary-assembled unit 8 is cut along the cut plane 900 passing through the seal member 3 (the partition member 32), the first glass substrate 1, the seal member 3, and the second glass substrate 2 can be cut collectively as if a single glass plate is cut.

Note that, in the present embodiment, the temporary-assembled unit 8 is formed to give two glass panel units. However, the temporary-assembled unit 8 may be formed to give three or more glass panel units (that is, to allow taking out three or more parts from a whole).

### (GLASS PANEL UNIT OF THIRD EMBODIMENT)

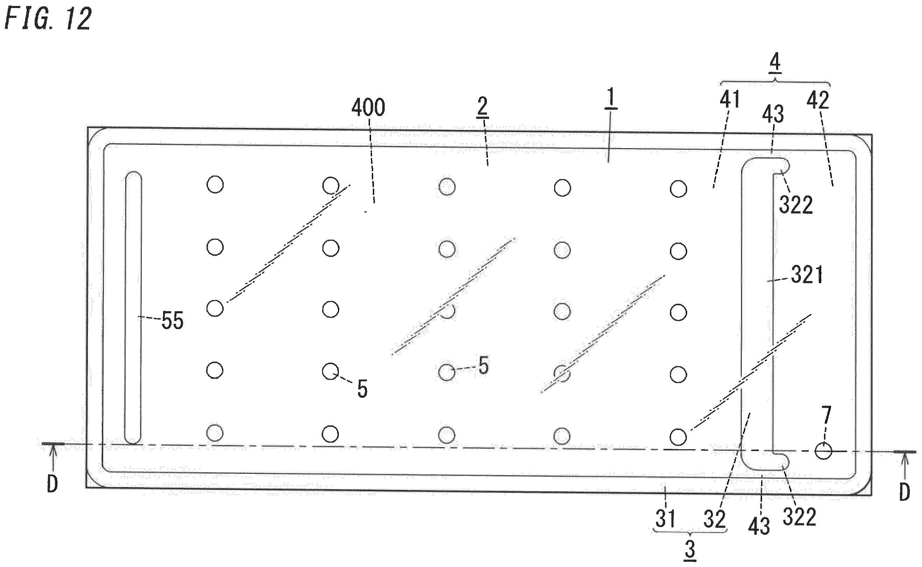

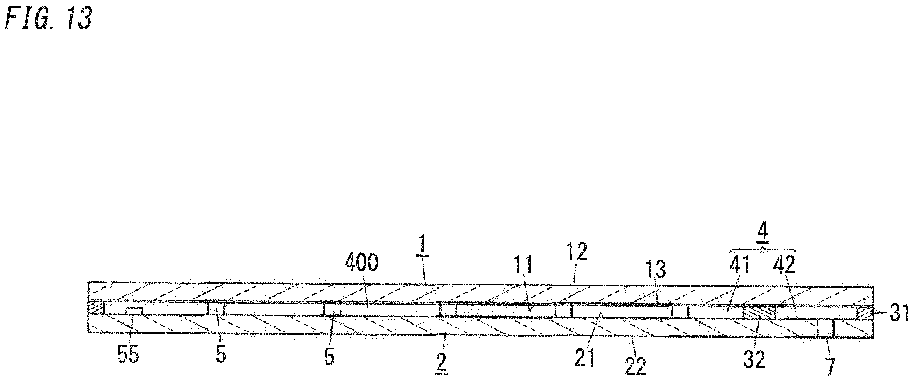

A manufacturing method for a glass panel unit of the third embodiment is described with reference to FIG. 12 to FIG. 14. Note that, same components as the first embodiment are designated by common reference signs to avoid detailed descriptions, and different components from the first embodiment are described in detail.

In the manufacturing method for glass panel unit of the present embodiment, a glass panel unit can be obtained by way of a placing step S1, a bonding step S2, a treatment step S3, and a cutting step S4.

In the present embodiment, in the treatment step S3, a pressure of an inside space 4 is not reduced until the inside space 4 is in a vacuum state but a whole of the inside space 4 is filled with gas 400 through a vent 7 and gas passages 43 (see FIG. 12). After that, part (a partition member 32) of a seal member 3 is deformed by heating to hermetically enclose a first space 41. Examples of the gas 400 may include low thermal conductive gas such as dry air and argon gas.

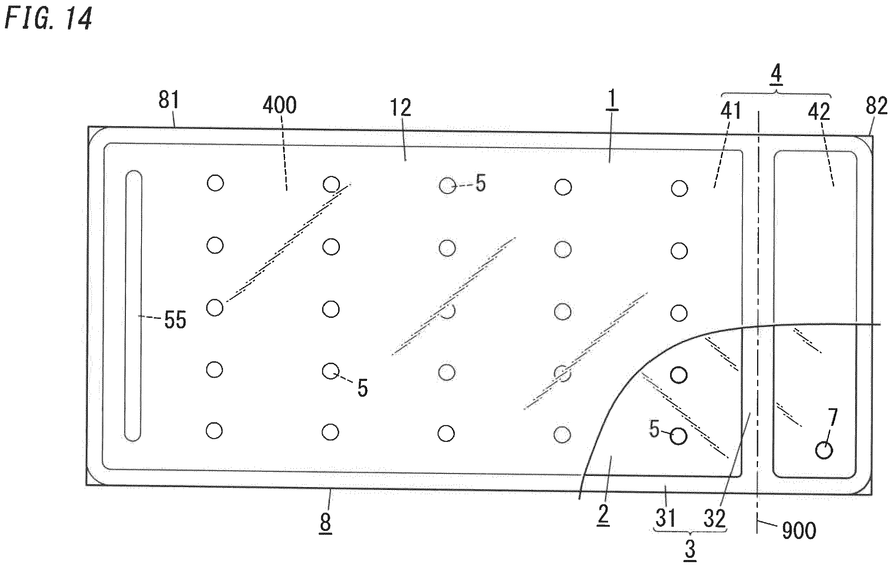

Through the aforementioned treatment step S3, it is possible to produce a temporary-assembled unit 8 including the first space 41 filled with gas 400, as shown in FIG. 14.

In the cutting step S4, the temporary-assembled unit 8 is cut along a cut plane 900 and thereby physically divided into a part 81 including the first space 41 and a part 82 including a second space 42. The cut plane 900 is provided straightly to pass through an entire length of the partition member 32.

One part 81 cut from the temporary-assembled unit 8 is used as a glass panel unit (thermally insulated glass panel unit) where a space between the first glass substrate 1 and the second glass substrate 2 is filled with the gas 400, and the other part 82 including the second space 42 is an unnecessary part.

### (GLASS PANEL UNIT OF FOURTH EMBODIMENT)

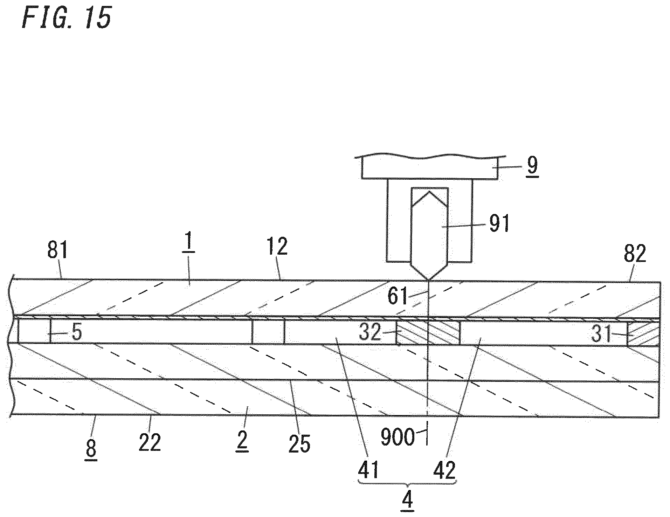

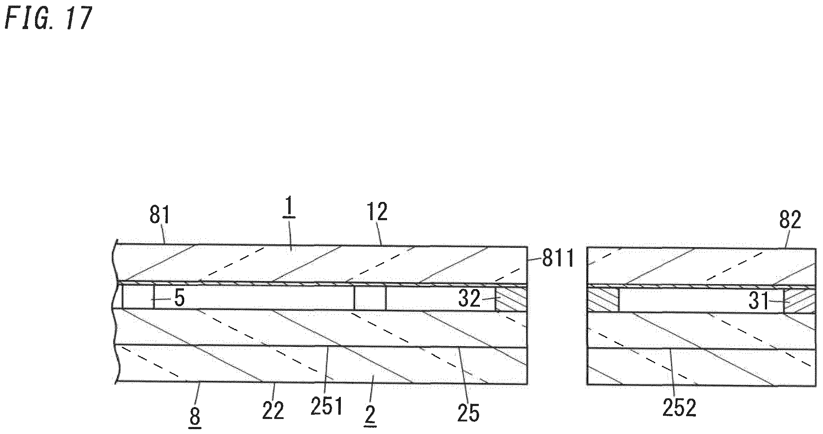

A manufacturing method for a glass panel unit of the fourth embodiment is described with reference to FIG. 15 to FIG. 18. Note that, same components as the first embodiment are designated by common reference signs to avoid detailed descriptions, and different components from the first embodiment are described in detail.

In the manufacturing method for glass panel unit of the present embodiment, a glass substrate with wire 25 embedded therein is used as a second glass substrate 2. The wire 25 may be formed into mesh, for example.

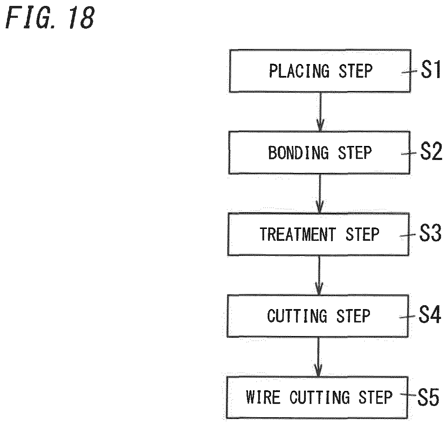

As shown in FIG. 18, the manufacturing method for glass panel unit of the present embodiment includes a placing step S1, a bonding step S2, a treatment step S3, and a cutting step S4, and additionally a the wire cutting step S5.

The placing step S1, the bonding step S2, and the treatment step S3 of the present embodiment are same as or similar to those in the first embodiment. Hereinafter, the cutting step S4 and the wire cutting step S5 are described in detail.

In the cutting step S4, a first glass substrate 1 is placed above the second glass substrate 2, and a temporary-assembled unit 8 is held in a posture where a second face 12 of the first glass substrate 1 points upward. And, a wheel 91 of a cutting device 9 is moved along a cut plane 900 with it being pressed against the second face 12 of the first glass substrate 1 from the above. With movement of the wheel 91, a crack 61 along the cut plane 900 propagates (develops) from the second face 12 (upper face) of the first glass substrate 1 toward the second glass substrate 2 (see FIG. 15).

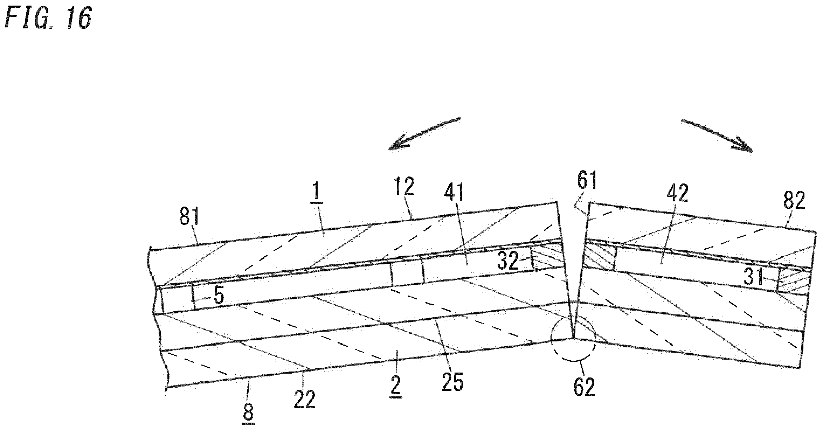

Here, when external force is applied to the temporary-assembled unit 8 in directions (directions of arrows shown in FIG. 16) so as to bend the temporary-assembled unit 8 with the second glass substrate 2 pointing inward, the crack 61 further develops along the cut plane 900, and thereby the first glass substrate 1, the seal member 3, and the second glass substrate 2 are collectively cut by the crack 61 developed. At the time of completion of the cutting step S4, the wire 25 is not cut yet but remains.

The wire cutting step S5 is a step of cutting the wire 25 of the second glass substrate 2 after the first glass substrate 1, the seal member 3, and the second glass substrate 2 are cut collectively in the cutting step S4.

Through the wire cutting step S5, the wire 25 is cut into wire 251 embedded in one part 81 (a part used as a glass panel unit) from the temporary-assembled unit 8 and wire 252 embedded in the other part 82 (an unnecessary part). The wire 251 may be preferably subjected to appropriate treatment not to protrude outside from the sectional plane 811.

As described above, the crack 61 is made to propagate from the first glass substrate 1 to thereby break the temporary-assembled unit 8 with the second glass substrate 2 with wire 25 pointing inward. Hence, it is possible to suppress breakage from occurring accompanied by cutting. In more detail, in breaking the temporary-assembled unit 8, in an inward region of the bent wire 25 (a region 62 shown in FIG. 16) pieces of glass may easily strike each other. However, the region 62 is a short distance from the wire 25 and therefore pieces of glass can be suppressed from striking each other with great force, leading to a decrease in breakage.

The manufacturing method for the glass panel unit of the second or third embodiment also may include steps similar to the steps of the fourth embodiment.

In more detail, also in the second or third embodiment, the glass substrate with the wire 25 embedded therein may be used as the second glass substrate 2. And, the crack 61 may be made to develop from the first glass substrate 1 and the first glass substrate 1, the seal member 3, and the second glass substrate 2 may be cut collectively by bending them with the second glass substrate 2 pointing inward. After that, the wire 25 of the second glass substrate 2 may be cut.

### (GLASS PANEL UNIT OF FIFTH EMBODIMENT)

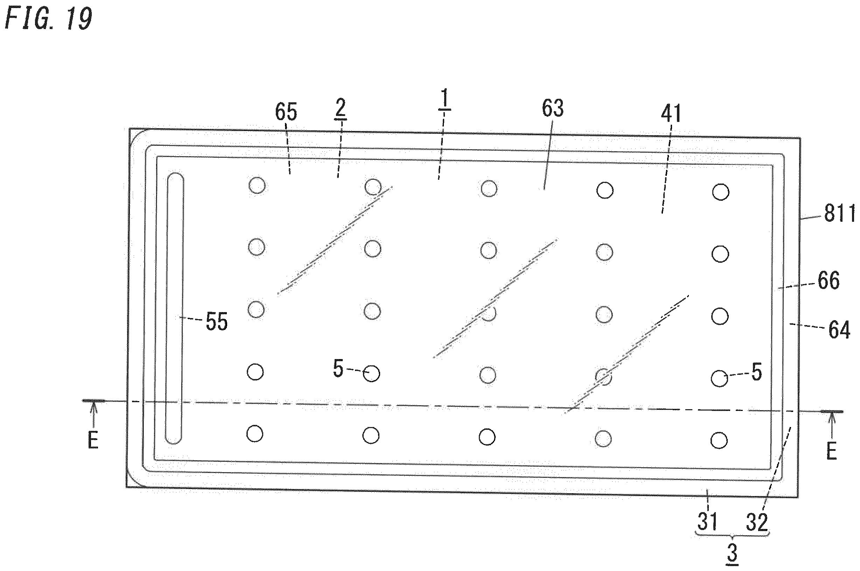

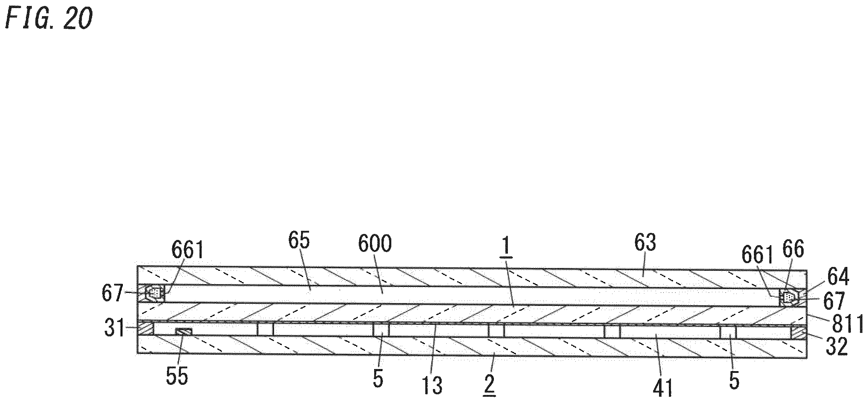

A manufacturing method for a glass panel unit of the fifth embodiment is described with reference to FIG. 19 to FIG. 21. Note that, same components as the first embodiment are designated by common reference signs to avoid detailed descriptions, and different components from the first embodiment are described in detail.

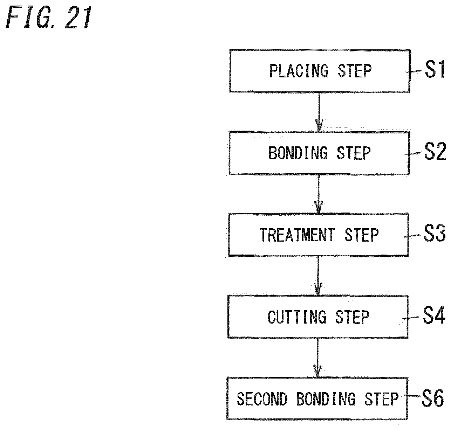

As shown in FIG. 21, the manufacturing method for glass panel unit of the present embodiment includes a placing step S1, a bonding step S2, a treatment step S3, and a cutting step S4, and in addition a second bonding step S6.

The second bonding step S6 is a step of bonding a first glass substrate 1 and a third glass substrate 63 to each other with a second seal member 64 with a frame shape to form a second inside space 65 enclosed by the second seal member 64.

Examples of material of the third glass substrate 63 may include soda lime glass, high strain point glass, chemically strengthened glass, non-alkaline glass, quartz glass, neoceram, and physically strengthened glass.

There is a spacer 66 inside the second seal member 64, and the spacer 66 has a frame shape with a hollow inside space. The hollow inside space of the spacer 66 is filled with desiccant 67.

The spacer 66 is made of metal such as aluminum and includes through holes 661 at its inner peripheral side. The hollow inside space of the spacer 66 is connected to the second inside space 65 through the through holes 661. Examples of the desiccant 67 may include silica gel. Examples of material for the second seal member 64 may include highly airtight resin such as silicone resin and butyl rubber.

The second inside space 65 is a space hermetically separated from outside. The second inside space 65 is filled with the dry gas 600. Examples of the dry gas 600 may include dry rare gas such as dry argon as well as dry air. Examples of the dry air may include air which is introduced in the second inside space 65 and then dried due to action of the desiccant 67.

According to the glass panel unit manufactured by the present embodiment, the first space 41 of which pressure is reduced until vacuum and the second inside space 65 filled with the dry gas 600 are interposed between the third glass substrate 63 and the second glass substrate 2 on opposite sides in the thickness direction. Thereby, thermally insulating properties can be more improved.

In the present embodiment, the third glass substrate 63 is placed opposite the first glass substrate 1. However, the third glass substrate 63 may be placed opposite the second glass substrate 2. In this case, in the second bonding step S6, peripheries of the second glass substrate 2 and the third glass substrate 63 are bonded together by the second seal member 64 with the spacer 66 being interposed between the second glass substrate 2 and the third glass substrate 63. By doing so, the second inside space 65 is formed between the second glass substrate 2 and the third glass substrate 63.

Note that, the manufacturing method for the glass panel unit of the second, third, or fourth embodiment also may include steps similar to the steps of the fifth embodiment.

In more detail, the second, third, or fourth embodiment may further include the second bonding step S6 of bonding one of the first glass substrate 1 and the second glass substrate 2 cut in the cutting step S4 to the third glass substrate 63 with the second seal member 64 with the frame shape. Also in this case, the second inside space 65 enclosed by the second seal member 64 with the frame shape is formed, leading to a further increase in thermal insulating properties.

### (GLASS WINDOWS WITH FIRST TO FOURTH GLASS PANEL UNITS)

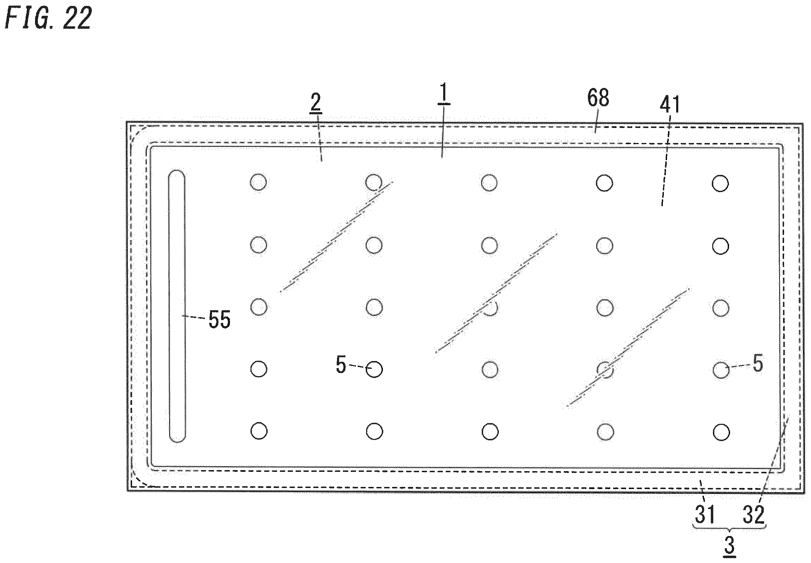

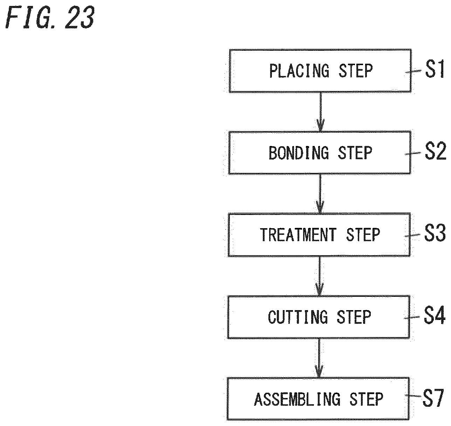

First, a manufacturing method for a glass window including the glass panel unit of the first embodiment is described with reference to FIG. 22 and FIG. 23.

As shown in FIG. 22, the glass panel unit of the first embodiment and a window frame 68 constitute a glass window.

The manufacturing method for glass window includes, as shown in FIG. 23, the placing step S1, the bonding step S2, the treatment step S3, and the cutting step S4 included in the manufacturing method for the glass panel unit of the first embodiment, and additionally an assembling step S7 of fitting a glass panel unit manufactured through the individual steps S1, S2, S3, and S4 into the window frame 68 with a rectangular shape. In the treatment step S3, air is evacuated from the inside space 4.

Since the glass window manufactured by this method has a structure where the glass panel unit including the first space 41 between the first glass substrate 1 and the second glass substrate 2 is fitted into the window frame 68 and the first space 41 has reduced pressure, the glass window has improved thermally insulating properties.

Similarly, the glass panel unit of any of the second to fourth embodiments may be fitted into the window frame 68 in the assembling step S7 in a similar way. Also in this case, the glass window manufactured through the assembling step S7 includes the first space 41 with reduced pressure between the first glass substrate 1 and the second glass substrate 2, and therefore has improved thermally insulating properties.

### (GLASS WINDOW WITH FIFTH GLASS PANEL UNITS)

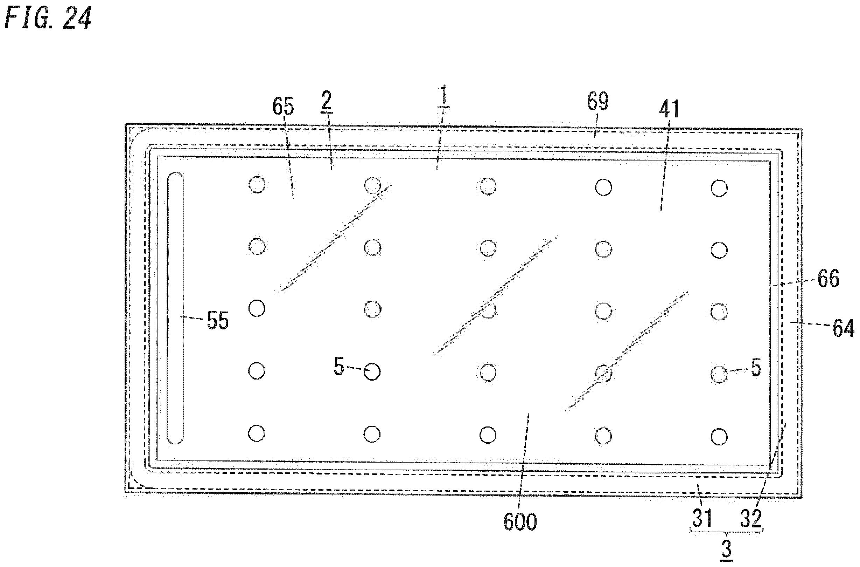

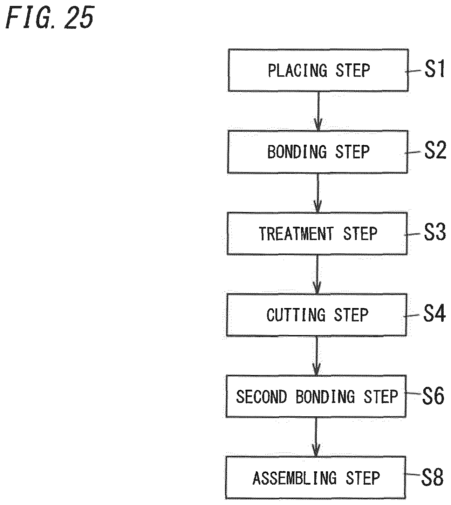

A manufacturing method for a glass window including the glass panel unit of the fifth embodiment is described with reference to FIG. 24 and FIG. 25.

As shown in FIG. 24, the glass panel unit of the fifth embodiment and a window frame 69 constitute a glass window.

The manufacturing method for glass window includes, as shown in FIG. 25, the placing step S1, the bonding step S2, the treatment step S3, the cutting step S4, and the second bonding step S6 included in the manufacturing method for the glass panel unit of the fifth embodiment, and additionally an assembling step S8 of fitting a glass panel unit manufactured through the individual steps S1, S2, S3, S4, and S6 into the window frame 69. In the treatment step S3, air is evacuated from the inside space 4. The second inside space 65 formed in the second bonding step S6 is a space filled with the dry gas 600.

The glass window manufactured by this method has a structure where the glass panel unit including the first space 41 and the second inside space 65 is fitted into the window frame 69, and therefore has improved thermally insulating properties.

### (MODIFICATIONS)

Hereinafter, modifications of the glass panel units of the first to fifth embodiments are described.

As to the first to fifth embodiments, the vent 7 is formed in the second glass substrate 2. However, it is sufficient that the vent 7 is formed in at least one of the first glass substrate 1 and the second glass substrate 2. In more detail, the vent 7 may be formed in the first glass substrate 1, or the vents 7 may be formed in both the first glass substrate 1 and the second glass substrate 2.

As to the first and second embodiments, pressure of the inside space 4 is reduced until the inside space 4 becomes an evacuated space, and as to the third embodiment the inside space 4 is filled with the gas 400. However, the inside space 4 may not have reduced pressure and may not be filled with the gas 400. Also in this case, the inside space 4 is still between the first glass substrate 1 and the second glass substrate 2, and therefore thermally insulating properties can be realized.

As to the first and third embodiments, the inside space 4 is partitioned into one first space 41 and one second space 42, and as to the second embodiment, the inside space 4 is partitioned into two first spaces 41 and one second space 42. However, how to partition the inside space 4 may not be limited to the above cases. Stated differently, the inside space 4 may be partitioned into one or more first spaces 41 and one or more second spaces 42 by the partition member 32. It is possible to obtain, from the temporary-assembled unit 8, multiple glass panel units the number of which is equal to the number of first spaces 41 partitioned from the inside space 4.

As to the first to fifth embodiments the seal member 3 includes the partition member 32, but may not include the partition member 32. Also in this case, by cutting collectively the first glass substrate 1, the seal member 3, and the second glass substrate 2 along the cut plane 900 imaginary passing through the seal member 3, it is possible to give a smooth sectional plane as if it is given by cutting one plate of glass.

Hereinbefore, the glass panel units of the first to fifth embodiments and the glass windows including these glass panel units are described with the attached drawings. Each embodiment may be modified appropriately according to design incentives, and one or more of components of the individual embodiments may be combined to apply to other embodiments.

As obviously understood from the aforementioned embodiments and modifications, the manufacturing method for glass panel unit according to the first aspect includes the placing step S1, the bonding step S2, and the cutting step S4.

The placing step S1 is a step of placing a first glass substrate 1 and a second glass substrate 2 to face each other with a seal member 3 in-between. The bonding step S2 is a step of bonding the first glass substrate 1 and the second glass substrate 2 to each other with the seal member 3. The cutting step S4 is a step of cutting the first glass substrate 1, the seal member 3, and the second glass substrate 2 collectively along a cut plane 900 imaginary passing through the seal member 3 from one of the first glass substrate 1 and the second glass substrate 2 bonded to each other.

According to the first aspect, by bonding the first glass substrate 1 and the second glass substrate 2 to each other to form the temporary-assembled unit 8 and then cutting the temporary-assembled unit 8, the sealing furnace, glass panel units with various dimensions and shapes can be obtained. Therefore, it is possible to efficiently manufacture a glass panel unit with desired dimensions and shape, and also possible to obtain multiple glass panel units from one temporary-assembled unit 8.

Note that, an increase in a redundant space inside the sealing furnace may cause a decrease in efficiency in manufacture. However, according to the first aspect, it is possible to suppress an increase in the redundant space inside the furnace by use of the sealing furnace suitable for the temporary-assembled unit 8. Stated differently, in order to suppress an increase in the redundant space inside the furnace, there is no need to use a dedicated sealing furnace in accordance with a type (dimensions and shape) of a glass panel unit to manufacture.

Additionally, according to the first aspect, the first glass substrate 1 and the second glass substrate 2 bonded to each other with the seal member 3 are collectively and smoothly cut along the cut plane 900 which is imaginary and passes through the seal member 3, as if a single plate of glass is cut. The sectional plane 811 resulting from cutting along the cut plane 900 is flat as with a sectional plane of a single plate of glass, and therefore strength can be ensured without additional processing, and handleability can be improved.

The manufacturing method for glass panel unit, of the second aspect, includes the elements of the first aspect and additional elements as follows. The second aspect further includes the wire cutting step S5.

The second glass substrate 2 is a glass substrate provided with a wire 25 embedded therein. The cutting step S4 includes making a crack 61 propagate from the first glass substrate 1 to the second glass substrate 2 along the cut plane 900 imaginary to thereby break the first glass substrate 1, the seal member 3, and the second glass substrate 2 at the crack 61 with the second glass substrate 2 pointing inward. The wire cutting step S5 is a step of cutting the wire 25 of the second glass substrate 2 subsequent to the cutting step S4.

According to the second aspect, strength of the second glass substrate 2 can be improved by the wire 25, and therefore entire strength of the glass panel unit can be improved. Additionally, it is possible to suppress breakage which would otherwise occur in collectively cutting the first glass substrate 1 and the second glass substrate 2.

The manufacturing method for glass panel unit, of the third aspect, includes the elements of the second aspect and additional elements as follows. In the third aspect, in the cutting step S4 the first glass substrate 1 is positioned above the second glass substrate 2 and the crack 61 is made to propagate from an upper face of the first glass substrate 1.

According to the third aspect, the crack 61 is made to develop by pressing the wheel 91 against the first glass substrate 1 from the above or the like. And, the first glass substrate 1 and the second glass substrate 2 are bent by lifting up part where the crack 61 develops relative to remaining part. Thereby, the first glass substrate 1, the seal member 3, and the second glass substrate 2 are cut collectively.

The manufacturing method for glass panel unit, of the fourth aspect, includes the elements of any of the first to third aspects, and additional elements as follows. In the fourth aspect, the seal member 3 includes a frame member 31 with a frame shape. The bonding step S2 includes forming an inside space 4 enclosed by the frame member 31 between the first glass substrate 1 and the second glass substrate 2 bonded to each other with the frame member 31.

According to the fourth aspect, the inside space 4 is positioned between the first glass substrate 1 and the second glass substrate 2, and therefore this can lead to an increase in the thermally insulating properties of the glass panel unit. In other words, the fourth aspect enables efficiently manufacturing a glass panel unit with desired shape and dimensions and improved thermally insulating properties.

The manufacturing method for glass panel unit, of the fifth aspect, includes the elements of the fourth aspect, and additional elements as follows. The fifth aspect further includes a treatment step S3 of evacuating air from the inside space 4 or supplying gas 400 to the inside space 4.

According to the fifth aspect, the inside space 4 with a reduced pressure or filled with the gas 400 is positioned between the first glass substrate 1 and the second glass substrate 2, and therefore this can lead to a further increase in the thermally insulating properties of the glass panel unit. In other words, the fifth aspect enables efficiently manufacturing a glass panel unit with desired shape and dimensions and improved thermally insulating properties.

The manufacturing method for glass panel unit, of the sixth aspect, includes the elements of the fifth aspect, and additional elements as follows. In the sixth aspect, the seal member 3 further includes a partition member 32 for partitioning the inside space 4 into multiple spaces 41, 42 (41a, 41b, 42). The cutting step S4 includes cutting the first glass substrate 1, the partition member 32, and the second glass substrate 2 collectively along the cut plane 900 passing through the partition member 32.

The sixth aspect enables efficiently manufacturing a glass panel unit with desired shape and dimensions and improved thermally insulating properties, by cutting the temporary-assembled unit 8 along the partition member 32.

The manufacturing method for glass panel unit, of the seventh aspect, includes the elements of the sixth aspect, and additional elements as follows. In the seventh aspect, the bonding step S2 includes bonding the first glass substrate 1 and the second glass substrate 2 to each other with the frame member 31 to partition the inside space 4 into the multiple spaces 41, 42 (41a, 41b, 42) by the partition member 32. And, the bonding step S2 includes providing one or more gas passages 43 (43a, 43b) for allowing gas move between the multiple spaces 41, 42 (41a, 41b, 42). The treatment step S3 includes evacuating air from the inside space 4 or supplying gas 400 to the inside space 4 and then closing the one or more gas passages 43 (43a, 43b) to prevent movement of gas between the multiple spaces 41, 42 (41a, 41b, 42). The cutting step S4 includes dividing the first glass substrate 1, the partition member 32, and the second glass substrate 2 collectively along the cut plane 900 passing through the partition member 32.

Accordingly, the seventh aspect enables efficiently manufacturing a glass panel unit with desired shape and dimensions and improved thermally insulating properties.

The manufacturing method for glass panel unit, of the eighth aspect, includes the elements of the sixth aspect, and additional elements as follows. In the eighth aspect, at least one of the first glass substrate 1 and the second glass substrate 2 includes a vent 7. The bonding step S2 includes partitioning by the partition member 32 the inside space 4 into a first space 41 (41a, 41b) directly connected to the vent 7 and a second space 42 not directly connected to the vent 7. Additionally the bonding step S2 includes providing one or more gas passages 43 (43a, 43b) for allowing gas to move between the first space 41 (41a, 41b) and the second space 42. The treatment step S3 includes evacuating air from the inside space 4 or supplying gas 400 to the inside space 4, through the vent 7, and then closing the one or more gas passages 43 (43a, 43b) to hermetically enclose the first space 41 (41a, 41b). The cutting step S4 includes dividing the first glass substrate 1, the partition member 32, and the second glass substrate 2 into a part 81 including the first space 41 and a part 82 including the second space 42 and the vent 7, by collectively cutting the first glass substrate 1, the partition member 32, and the second glass substrate 2 along the cut plane 900 passing through the partition member 32.

According to the eighth aspect, the part 81 (81a, 81b) including the first space 41 (41a, 41b) which is the temporary-assembled unit 8 except for the part 82 including the second space 42 and the vent 7 can be provided as a glass panel unit with improved thermally insulating properties.

The manufacturing method for glass panel unit, of the ninth aspect, includes the elements of any of the fifth to eighth aspects, and additional elements as follows. The ninth aspect further includes a second bonding step S6. The second bonding step S6 is a step of bonding one of the first glass substrate 1 and the second glass substrate 2 cut in the cutting step S4 to a third glass substrate 63 with a second seal member 64 with a frame shape to form a second inside space 65 enclosed by the second seal member 64.

According to the ninth aspect, the glass panel unit further including the second inside space 65 with thermally insulating properties can be obtained. In other words, the ninth aspect enables efficiently manufacturing the glass panel unit with more improved thermally insulating properties.

The manufacturing method for glass window, of the first aspect, includes an assembling step S7 of fitting a glass panel unit manufactured by the manufacturing method for glass panel unit of any one of the fifth to eighth aspects, into a window frame 68. The treatment step S3 includes evacuating air from the inside space 4.

Accordingly, the first aspect enables efficiently manufacturing a glass window with desired shape and dimensions and improved thermally insulating properties.

The manufacturing method for glass window, of the second aspect, includes the assembling step S8 of fitting a glass panel unit manufactured by the manufacturing method for glass panel unit of the ninth aspect, into a window frame 69. The treatment step S3 includes evacuating air from the inside space 4. The second inside space 65 formed in the second bonding step S6 is a space filled with dry gas 600.

Accordingly, the second aspect enables efficiently manufacturing a glass window with desired shape and dimensions and improved thermally insulating properties.

### Reference Signs List

- 1: First Glass Substrate
- 2: Second Glass Substrate
- 3: Seal Member
- 4: Inside Space
- 7: Vent
- 25: Wire
- 31: Frame Member
- 32: Partition Member
- 41 (41a, 41b): Space (First Space)
- 42: Space (Second Space)
- 43 (43a, 43b): Gas Passage
- 61: Crack
- 63: Third Glass Substrate
- 64: Second Seal Member
- 65: Second Inside Space
- 68: Window Frame
- 69: Window Frame
- 81 (81a, 81b): Part
- 82: Part
- 400: Gas
- 600: Dry Gas
- 900: Cut Plane
- S1: Placing Step
- S2: Bonding Step
- S3: Treatment Step
- S4: Cutting Step
- S5: Wire Cutting Step
- S6: Second Bonding Step
- S7: Assembling Step
- S8: Assembling Step

## Claims

1. A manufacturing method for a glass panel unit comprising:
a placing step of placing a first glass substrate and a second glass substrate to face each other with a seal member including a frame member with a frame shape in-between;
a bonding step of bonding the first glass substrate and the second glass substrate to each other with the seal member, and forming an inside space enclosed by the frame member between the first glass substrate and the second glass substrate bonded to each other with the frame member;
a treatment step of evacuating air from the inside space or supplying gas to the inside space; and
a cutting step of cutting the first glass substrate, the seal member, and the second glass substrate collectively along a cut plane imaginary passing through the seal member from one of the first glass substrate and the second glass substrate bonded to each other;
**characterized in that**:
at least one of the first glass substrate and the second glass substrate includes a vent;
the seal member further includes a partition member;
the bonding step includes partioning by the partition member the inside space into a first space directly connected to the vent and a second space not directly connected to the vent, and providing one or more gas passages for allowing gas to move between the first space and the second space;
the treatment step includes evacuating air from the inside space or supplying gas to the inside space, through the vent, and then closing the one or more gas passages to hermetically enclose the first space; and
the cutting step includes cutting the first glass substrate, the partition member, and the second glass substrate collectively along the cut plane passing through the partition member, and dividing the first glass substrate, the partition member, and the second glass substrate into a part used as a panel unit including the first space and an unnecessary part including the second space and the vent.

2. The manufacturing method for a glass panel unit according to claim 1, further comprising a wire cutting step,
wherein:
the second glass substrate is a glass substrate provided with wire embedded therein;
the cutting step includes making a crack propagate from the first glass substrate to the second glass substrate along the cut plane imaginary to thereby break the first glass substrate, the seal member, and the second glass substrate at the crack with the second glass substrate pointing inward; and
the wire cutting step is a step of cutting the wire of the second glass substrate subsequent to the cutting step.

3. The manufacturing method for a glass panel unit according to claim 2, wherein in the cutting step the first glass substrate is positioned above the second glass substrate and the crack is made to propagate from an upper face of the first glass substrate.

4. The manufacturing method for a glass panel unit according to any one of claims 1 to 3, further comprising a second bonding step of bonding one of the first glass substrate and the second glass substrate cut in the cutting step to a third glass substrate with a second seal member with a frame shape to form a second inside space enclosed by the second seal member.

5. A manufacturing method for a glass window comprising an assembling step of fitting a glass panel unit manufactured by the manufacturing method for a glass panel unit according to any one of claims 1 to 3, into a window frame,
wherein the treatment step includes evacuating air from the inside space.

6. A manufacturing method for a glass window comprising an assembling step of fitting a glass panel unit manufactured by the manufacturing method for a glass panel unit according to claim 4, into a window frame,
wherein:
the treatment step includes evacuating air from the inside space; and
the second inside space formed in the second bonding step is a space filled with dry gas.

## Patentansprüche

1. Herstellungsverfahren für eine Glasscheibeneinheit, umfassend:
einen Anordnungsschritt des Anordnens eines ersten Glassubstrats und eines zweiten Glassubstrats, so dass sie einander mit einem Dichtungselement, das ein Rahmenelement mit einer Rahmenform einschließt, dazwischen gegenüberliegen;
einen Verbindungsschritt des Verbindens des ersten Glassubstrats und des zweiten Glassubstrats miteinander mit dem Dichtungselement und des Bildens eines Innenraums, der durch das Rahmenelement zwischen dem ersten Glassubstrat und dem zweiten Glassubstrat, die mit dem Rahmenelement miteinander verbunden sind, eingeschlossen ist;
einen Behandlungsschritt des Evakuierens von Luft aus dem Innenraum oder des Zuführens von Gas zu dem Innenraum; und
einen Schneideschritt des Schneidens des ersten Glassubstrats, des Dichtungselements und des zweiten Glassubstrats gemeinsam entlang einer Schnittebene, die imaginär durch das Dichtungselement von einem des ersten Glassubstrats und des zweiten Glassubstrats, die miteinander verbunden sind, verläuft;
**dadurch gekennzeichnet, dass**
mindestens eines des ersten Glassubstrats und des zweiten Glassubstrats eine Öffnung aufweist;
das Dichtungselement weiter ein Trennelement enthält;
der Schritt des Verbindens das Unterteilen des Innenraums durch das Trennelement in einen ersten Raum, der direkt mit der Öffnung verbunden ist, und einen zweiten Raum, der nicht direkt mit der Öffnung verbunden ist, und das Bereitstellen von einem oder mehreren Gasdurchlässen, um zu gewährleisten, dass sich Gas zwischen dem ersten Raum und dem zweiten Raum bewegen kann, einschließt;
der Behandlungsschritt das Evakuieren von Luft aus dem Innenraum oder das Zuführen von Gas in den Innenraum durch die Öffnung und das anschließende Schließen des einen oder der mehreren Gasdurchlässe, um den ersten Raum hermetisch zu umschließen, einschließt; und
der Schneideschritt das gemeinsame Schneiden des ersten Glassubstrats, des Trennelements und des zweiten Glassubstrats gemeinsam entlang der Schnittebene, die durch das Trennelement verläuft, und das Teilen des ersten Glassubstrats, des Trennelements und des zweiten Glassubstrats in einen Teil, der als Scheibeneinheit verwendet wird und den ersten Raum einschließt, und einen nicht benötigten Teil, der den zweiten Raum und die Öffnung einschließt, einschließt.

2. Herstellungsverfahren für eine Glasscheibeneinheit nach Anspruch 1, weiter umfassend einen Drahtschneideschritt,
wobei:
das zweite Glassubstrat ein Glassubstrat ist, das mit einem darin eingebetteten Draht versehen ist;
der Schneideschritt einschließt, dass man einen Riss dazu bringt, von dem ersten Glassubstrat zu dem zweiten Glassubstrat entlang der imaginären Schnittebene fortzuschreiten, um dadurch das erste Glassubstrat, das Dichtungselement und das zweite Glassubstrat an dem Riss zu brechen, wobei das zweite Glassubstrat nach innen zeigt; und
der Drahtschneideschritt ein Schritt des Schneidens des Drahtes des zweiten Glassubstrats im Anschluss an den Schneideschritt ist.

3. Herstellungsverfahren für eine Glasscheibeneinheit nach Anspruch 2, wobei in dem Schneideschritt das erste Glassubstrat über dem zweiten Glassubstrat angeordnet ist und der Riss dazu gebracht wird, sich von einer oberen Fläche des ersten Glassubstrats auszubreiten.

4. Herstellungsverfahren für eine Glasscheibeneinheit nach einem der Ansprüche 1 bis 3, weiter umfassend einen zweiten Verbindungsschritt des Verbindens eines des ersten Glassubstrats und des zweiten Glassubstrats, das in dem Schneideschritt geschnitten wurde, mit einem dritten Glassubstrat mit einem zweiten Dichtungselement mit einer Rahmenform, um einen zweiten Innenraum zu bilden, der von dem zweiten Dichtungselement umschlossen ist.

5. Herstellungsverfahren für ein Glasfenster, umfassend einen Montageschritt des Einsetzens einer Glasscheibeneinheit, die durch das Herstellungsverfahren für eine Glasscheibeneinheit nach einem der Ansprüche 1 bis 3 hergestellt wurde, in einen Fensterrahmen,
wobei der Behandlungsschritt das Evakuieren von Luft aus dem Innenraum umfasst.

6. Herstellungsverfahren für ein Glasfenster, umfassend einen Montageschritt des Einsetzens einer Glasscheibeneinheit, die durch das Herstellungsverfahren für eine Glasscheibeneinheit gemäß Anspruch 4 hergestellt wurde, in einen Fensterrahmen,
wobei:
der Behandlungsschritt das Evakuieren von Luft aus dem Innenraum umfasst; und
der zweite Innenraum, der in dem zweiten Verbindungsschritt gebildet wurde, ein mit Trockengas gefüllter Raum ist.

## Revendications

1. Procédé de fabrication d'une unité panneau de verre comprenant:
une étape de placement où l'on place un premier substrat de verre et un deuxième substrat de verre pour qu'ils soient l'un face à l'autre avec un élément de scellement comprenant un élément cadre ayant une forme de cadre intercalée;
une étape de liaison où l'on lie le premier substrat de verre et le deuxième substrat de verre l'un à l'autre avec l'élément de scellement, et la formation d'un espace intérieur enfermé par l'élément cadre entre le premier substrat de verre et le deuxième substrat de verre liés l'un à l'autre avec l'élément cadre;
une étape de traitement où l'on évacue l'air de l'espace intérieur ou l'on injecte du gaz dans l'espace intérieur; et
une étape de découpe où l'on coupe le premier substrat de verre, l'élément cadre et
le deuxième substrat de verre ensemble sur un plan de coupe imaginaire passant à travers l'élément de scellement d'un du premier substrat de verre et du deuxième substrat de verre liés l'un à l'autre;
**caractérisé en ce que**
au moins l'un du premier substrat de verre et du deuxième substrat de verre comprend un évent;
l'élément de scellement comprend en outre un élément de partition;
l'étape de liaison comprend le partitionnement par l'élément de partition de l'espace intérieur en un premier espace directement raccordé à l'évent et un deuxième espace non directement raccordé à l'évent, et la mise à disposition d'un ou de plusieurs passages pour le gaz permettant au gaz de se déplacer entre le premier espace et le deuxième espace;
l'étape de traitement comprend l'évacuation de l'air de l'espace intérieur ou l'injection de gaz dans l'espace intérieur, via l'évent, puis la fermeture du un ou plusieurs passages pour le gaz pour fermer hermétiquement le premier espace; et
l'étape de découpe comprend la découpe du premier substrat de verre, de l'élément de partition et du deuxième substrat de verre ensemble sur le plan de coupe passant à travers l'élément de partition, et la division du premier substrat de verre, de l'élément de partition et du deuxième substrat de verre en une partie utilisée comme unité de panneau comprenant le premier espace et une partie superflue comprenant le deuxième espace et l'évent.

2. Procédé de fabrication d'une unité panneau de verre selon la revendication 1, comprenant en outre une étape de coupe de fil,
dans lequel:
le deuxième substrat de verre est un substrat de verre ayant du fil noyé dedans;
l'étape de découpe comprend la pratique d'une fissure qui se propage du premier substrat de verre au deuxième substrat de verre sur le plan de coupe imaginaire pour ainsi briser le premier substrat de verre, l'élément de scellement et le deuxième substrat de verre sur la fissure, le deuxième substrat de verre pointant vers l'intérieur; et
l'étape de coupage du fil est une étape où l'on coupe le fil du deuxième substrat de verre après l'étape de découpe.

3. Procédé de fabrication d'une unité panneau de verre selon la revendication 2, dans lequel à l'étape de découpe, le premier substrat de verre est situé au-dessus du deuxième substrat de verre et la fissure est pratiquée pour se propager à partir d'une face supérieure du premier substrat de verre.

4. Procédé de fabrication d'une unité panneau de verre selon l'une quelconque des revendications 1 à 3, comprenant en outre une deuxième étape de liaison qui consiste à lier l'un du premier substrat de verre et du deuxième substrat de verre découpé à l'étape de découpe, sur un troisième substrat de verre à l'aide d'un deuxième élément de scellement ayant une forme de cadre pour former un deuxième espace intérieur fermé par le deuxième élément de scellement.

5. Procédé de fabrication d'une fenêtre de verre comprenant une étape d'assemblage où l'on place une unité panneau de verre fabriquée par le procédé de fabrication pour une unité panneau de verre selon l'une quelconque des revendications 1 à 3, dans un cadre de fenêtre
dans lequel l'étape de traitement comprend l'évaluation de l'air de l'espace intérieur.

6. Procédé de fabrication d'une fenêtre de verre comprenant une étape d'assemblage où l'on place une unité panneau de verre fabriquée par le procédé de fabrication pour une unité panneau de verre selon la revendication, dans un cadre de fenêtre dans lequel:
l'étape de traitement comprend l'évacuation de l'air de l'espace intérieur; et le deuxième espace intérieur formé à la deuxième étape de liaison est un espace rempli de gaz sec.
